(19) Europäisches Patentamt
European Patent Office
Office européen des brevets

(11) **EP 2 684 670 A1**

(12) **EUROPEAN PATENT APPLICATION**
published in accordance with Art. 153(4) EPC

(43) Date of publication:
**15.01.2014 Bulletin 2014/03**

(21) Application number: **12755571.2**

(22) Date of filing: **29.02.2012**

(51) Int Cl.:
*B29C 45/73* (2006.01)  *B29C 33/38* (2006.01)
*B29C 45/78* (2006.01)  *C08L 81/04* (2006.01)
*B29K 81/00* (2006.01)

(86) International application number:
**PCT/JP2012/055051**

(87) International publication number:
**WO 2012/121075 (13.09.2012 Gazette 2012/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2011 JP 2011050886**

(71) Applicant: **Polyplastics Co., Ltd.
Tokyo 108-8280 (JP)**

(72) Inventors:
• **MIYASHITA, Takayuki
Fuji-shi
Shizuoka 416-8533 (JP)**
• **HIROTA, Shinichi
Fuji-shi
Shizuoka 416-8533 (JP)**

(74) Representative: **Maiwald Patentanwalts GmbH
Elisenhof
Elisenstrasse 3
80335 München (DE)**

(54) **PRODUCTION METHOD FOR INJECTION-MOLDED ARTICLE**

(57) Provided is a technology that sufficiently suppresses dimensional change in the usage environment even without applying heat treatment in advance to a resin-molded article constituted of a crystalline thermoplastic resin. A resin composition constituted of a crystalline thermoplastic resin is injection-molded using a mold on the inner surface of which a heat-insulating layer is formed. It is preferable, in the present invention, to use a mold on which a heat-insulating layer is formed, the layer being constituted of porous zirconia formed by spraying method and having a thermal conductivity of 2W/(m·K) or less and a thickness of no less than 200 $\mu$m. The injection-molded article obtained by the manufacturing method of the present invention has a dimensional change rate of 0.2% or less when left for 2 hours in an environment of a mold temperature + 20°C where the mold temperature is that at the time of injection molding and is Tg+30°C or more and Tg+80°C or less, in which Tg is a glass transition temperature of the crystalline thermoplastic resin.

EP 2 684 670 A1

**Description**

TECHNICAL FIELD

The present invention relates to a method for manufacturing an injection-molded article.

BACKGROUND ART

Crystalline thermoplastic resins have been used in a wide range of industrial fields centering on the electrical/electronic field, the automotive field and the like because of excellent chemical resistance, heat resistance, electrical properties, mechanical properties and the like thereof.

When the crystallinity of a resin molded article constituted of a crystalline thermoplastic resin is not sufficiently increased at the time of molding, the crystallization of the crystalline thermoplastic resin contained in the resin-molded article is promoted by heat applied to the resin-molded article in the usage environment. The dimensions of the resin-molded article are changed by this crystallization.

The dimensional change of resin-molded articles as described above is a problem in many uses such as electrical components, electronic components and automobile components.

Examples of a method for suppressing the dimensional change of resin-molded articles in such usage environment include a method in which, by applying heat treatment to a resin-molded article before use, the crystallinity of the resin-molded article is increased in advance (e.g. see Patent Document 1).

[Patent Document 1] Japanese Unexamined Patent Application, Publication No. 2010-110892

DISCLOSURE OF THE INVENTION

Problems to be Solved by the Invention

However, in the case of a method in which the dimensional change of a resin-molded article in the usage environment is suppressed by applying heat treatment to the resin-molded article after injection molding, the productivity of the molded article declines as much as this heat treatment is carried out. There is not only the problem of decline in productivity of resin-molded articles but there are also problems in which it is difficult to predict heat treatment-induced dimensional change with high accuracy and it is very difficult to control the dimensions of resin-molded articles.

The present invention is made to solve the above problems, and an object thereof is to provide a technology that sufficiently suppresses dimensional change in the usage environment even without applying heat treatment in advance to a resin-molded article constituted of a crystalline thermoplastic resin.

Means for Solving the Problems

The present inventors have thoroughly investigated to solve the problems described above. As a result, the present inventors have found that the problems can be solved by injection-molding a resin composition constituted of a crystalline thermoplastic resin, using a mold on the inner surface of which a heat-insulating layer is formed. More specifically, the present invention provides the following:

In a first aspect, a method for manufacturing an injection-molded article having a dimensional change rate of 0.2% or less when left for 2 hours in an environment of a mold temperature + 20°C, the mold temperature being that at which a resin composition constituted of a crystalline thermoplastic resin is injection-molded is provided, the method comprising injection-molding the resin composition using a mold on the inner surface of which a heat-insulating layer is formed, with the mold temperature being set to Tg + 30°C or more and Tg + 80°C or less, in which Tg is a glass transition temperature of the crystalline thermoplastic resin.

According to a second aspect of the present invention, in the method for manufacturing an injection-molded article according to the first aspect, the mold temperature + 20°C is 160°C, and the crystalline thermoplastic resin is a polyarylene sulfide resin.

According to a third aspect of the present invention, in the method for manufacturing an injection-molded article according to the first or second aspect, the heat-insulating layer is constituted of porous zirconia.

According to a fourth aspect of the present invention, in the method for manufacturing an injection-molded article according to any one of the first to third aspects, the heat-insulating layer has a thermal conductivity of 2 W/(m·K) or less.

According to a fifth aspect of the present invention, in the method for manufacturing an injection-molded article according to any one of the first to fourth aspects, the heat-insulating layer is formed by a spraying method.

According to a sixth aspect of the present invention, in the method for manufacturing an injection-molded article according to any one of the first to fifth aspects, the heat-insulating layer has a thickness of no less than 200 $\mu$m.

Effects of the Invention

According to the present invention, dimensional change in the usage environment can be sufficiently suppressed even without applying heat treatment in advance to a resin-molded article constituted of a crystalline thermoplastic resin.

PREFERRED MODE FOR CARRYING OUT THE INVENTION

The embodiments of the present invention are further described below. It should be noted that the present invention is not limited to the following embodiments.

Resin Composition

A resin composition is a raw material for injection-molded articles, and comprises a crystalline thermoplastic resin. Examples of crystalline thermoplastic resins include polyethylene resins, polypropylene resins, polyvinyl chloride resins, polyamide resins, polyacetal resins, polyarylene sulfide resins, liquid crystalline polyester resins, polyimide resins, syndiotactic polystyrene resins and the like. A resin composition can comprise two or more crystalline thermoplastic resins.

Among the crystalline thermoplastic resins described above, polyarylene sulfide resins have a low crystallization rate, and easily solidify before the resin composition sufficiently crystallizes in a mold. Therefore, in the case of injection-molded articles obtained by molding resin compositions constituted of the resins, dimensional change particularly in the usage environment easily becomes a problem.

According to the present invention, even in the case of an injection-molded article comprising a polyarylene sulfide resin, the dimensional change of the injection-molded article in the usage environment can be sufficiently reduced.

A polyarylene sulfide resin is mainly constituted of - (Ar-S)- (wherein Ar is an arylene group) as a repeating unit. In the present invention, a PAS resin having a generally known molecular structure can be used.

The arylene group includes, but is not specifically limited to, for example, p-phenylene group, m-phenylene group, o-phenylene group, substituted phenylene group, p,p'-diphenylene sulfone group, p,p'-biphenylene group, p,p'-diphenylene ether group, p,p'-diphenylene carbonyl group, naphthalene group. Among arylene sulfide groups having the arylene groups, preference is given to a homopolymer using the same repeating units, as well as, depending on the use, a polymer comprising repeating units having heterogeneous arylene sulfide groups.

As the homopolymer, a homopolymer having a repeating unit of p-phenylene sulfide groups as the arylene group is preferable, although depending on the use. This is because the homopolymer with the p-phenylene sulfide group as the repeating unit has very high heat-resistance, and exhibits high strength, high stiffness and high dimensional stability over a wide temperature range. A molded article with very excellent properties can be obtained by using the homopolymer.

Among arylene sulfide groups having the arylene group, a combination of at least two different arylene sulfide groups can be used for a copolymer. Among these, a combination of p-phenylene sulfide group with m-phenylene sulfide group is preferable in view of obtaining a molded article with excellent properties in terms of heat-resistance, moldability, mechanical property, etc. A polymer comprising no less than 70 mol% of the p-phenylene sulfide group is more preferable, and a polymer comprising no less than 80 mol% of the p-phenylene sulfide group is even more preferable.

The PAS resin having the p-phenylene sulfide group and the m-phenylene sulfide group as repeating units is particularly demanded for increase of the crystallinity in a molded article, etc. The high crystallinity of a molded article can be achieved by using the method for manufacturing an injection-molded article of the present invention. Furthermore, the method for manufacturing an injection-molded article of the present invention may be free from problems in terms of workability and productivity. Here, the PAS resin having a phenylene sulfide group is a PPS (polyphenylene sulfide) resin.

The resin composition used in the present invention may contain other resins within a range not hindering the effect of the present invention. In addition, compositions given desired properties by adding to the compositions additives such as nucleating agent, carbon black, inorganic filler such as glass fiber, pigment like inorganic calcined pigment, antioxidizing agent, stabilizing agent, plasticizer, lubricant, release agent, and flame retarder in order to impart desired properties to a molded article are also encompassed by the resin composition used in the present invention.

Mold

A mold used in the manufacturing method of the present invention has a heat-insulting layer formed on the inner surface of the mold. Since the heat-insulating layer is formed, the heat of a resin composition flowing into the mold is less apt to be released to the outside of the mold. As a result, the resin composition in contact with the inner surface of the mold is less apt to be rapidly cooled, and the crystallinity of the surface of a molded article can be sufficiently increased.

Heat-insulating layers may be those which have low thermal conductivity and such heat resistance that problems do not occur even when a high temperature resin composition comes into contact therewith, and the materials constituting the heat-insulating layer are not particularly limited.

Since there is a possibility that a decline in the crystallinity of the surface of an injection-molded article occurs at any position on the surface described above, it is preferred that a heat-insulating layer be formed on the whole inner surface of the mold. In addition, parts on which a heat-insulating layer is not formed may exist as long as the effect of the present invention is not impaired. When an injection-molded article has a part in which the crystallinity is not required to be particularly increased, a heat-insulating layer is not required to be formed on the inner surface of the mold which is in contact with the part at the time of molding.

Examples of materials which satisfy the heat resistance and thermal conductivity required for the heat-insulating layer include resins with high heat resistance and low thermal conductivity such as polyimide resins, and porous ceramics such as porous zirconia. These materials will be now described.

Specific examples of polyimide resins include pyromellitic acid (PMDA) polyimide, biphenyl tetracarboxylic acid polyimide, polyamide-imide using trimellitic acid, bismaleimide resins (bismaleimide/triazine etc.), benzophenone tetracarboxylic acid polyimide, acetylene-terminated polyimide, thermoplastic polyimide and the like. In addition, a heat-insulating layer constituted of a polyimide resin is particularly preferred. Examples of preferable materials other than polyimide resins include tetrafluoroethylene resins and the like. A heat-insulating layer may comprise resins other than polyimide resins and tetrafluoroethylene resins, additives and the like within the range not impairing the effect of the present invention.

The method for forming the heat-insulating layer on the inner surface of a mold is not particularly limited. It is preferred, for example, that the heat-insulating layer be formed on the inner surface of a mold by the following method.

Examples include a method for forming a heat-insulating layer of, for example, a polyimide film by applying a solution of polymer precursor, such as polyimide precursor, which can form a polymer heat-insulating layer, on the surface of a mold, by conducting heating to evaporate the solvent thereof, and by further conducting heating to cause polymerization; a method for vapor deposition-polymerizing monomers of a heat-resistant polymer such as pyromellitic acid anhydride and 4,4-diamino diphenyl ether; or with respect to a planar mold, a method for forming a heat-insulating layer by attaching a polymer heat-insulating film on the desired part of the mold using an appropriate adhering method or an adhesive tape-shaped polymer heat-insulating film. It is also possible that a polyimide film is formed and then a chromium (Cr) film or a titanium nitride (TiN) film is formed as a metal-based hard film on the surface thereof.

The thermal conductivity required for the heat-insulating layer constituted of the resins as described above varies depending on the use and the like, and is particularly preferably 2 W/(m·K) or less. An injection-molded article with a very high crystallinity is more easily obtained by adjusting the thermal conductivity of the heat-insulating layer to the range described above. The thermal conductivity described above indicates thermal conductivity measured by the method described in Examples.

The thickness of the heat-insulating layer, which is not particularly limited, may be appropriately set to a preferable thickness depending on a material to be used, a shape of the molded article, etc. In the case where the heat-insulating layer is constituted of a polyimide resin, it is preferred that the thickness of the heat-insulating layer is no less than 20 μm since a sufficiently high heat-insulating effect can be obtained. The thickness of the heat-insulating layer formed on the inner surface of the mold may be uniform; alternatively sites with a different thickness may be included in the heat-insulating layer.

Zirconia contained in porous zirconia is not particularly limited, and may be any of stabilized zirconia, partially stabilized zirconia and unstabilized zirconia. Stabilized zirconia, which is zirconia in which cubic zirconia is stabilized even at room temperature, is excellent in mechanical properties such as strength and toughness and wear resistance. Partially stabilized zirconia, which refers to a state in which tetragonal zirconia partially remains even at room temperature, undergoes martensitic transformation from the tetragonal system to the monoclinic system, inhibits growth of cracks spread due to tensile stress in particular, and has high rupture toughness. Unstabilized zirconia refers to zirconia which is not stabilized by a stabilizer. At least two selected from stabilized zirconia, partially stabilized zirconia, and unstabilized zirconia may be used in combination.

As a stabilizer contained in stabilized zirconia and partially stabilized zirconia, a conventionally known stabilizer can be employed. Examples thereof include yttria, ceria and magnesia. The amount of the stabilizer used is not particularly limited, and can be appropriately set according to the use, the material to be used, and so on.

Although porous ceramics other than porous zirconia can also be used, porous zirconia has high durability as compared to other porous ceramics. Therefore, by using a mold having a heat-insulating layer constituted of porous zirconia formed thereon, problems such as the transformation of the heat-insulating layer are less apt to occur, and thus the number of molded articles which can be successively molded is high and the productivity of molded articles is greatly increased.

Raw materials to form a heat-insulating layer may further comprise conventionally known additives and the like other than zirconia and stabilizers described above within the range not impairing the effect of the present invention.

The method for forming a heat-insulating layer using the raw materials described above is not particularly limited, and it is preferred that a spraying method be adopted. By adopting a spraying method, the thermal conductivity of porous zirconia is easily adjusted to the desired range. In addition, problems do not occur, such as a major decline in the mechanical strength of the heat-insulating layer due to excessive formation of air bubbles in the inner part of porous zirconia. By forming the heat-insulating layer by spraying described above, the structure of the heat-insulating layer becomes suitable for the use of the present invention.

The formation of the heat-insulating layer by spraying can be carried out, for example, as follows. First, raw materials are molten to obtain a liquid. This liquid is accelerated and made to collide with the inner surface of a cavity. Finally, the raw materials which are made to collide with and adhere to the inner surface of the cavity are solidified. By doing this, a very thin heat-insulating layer is formed on the inner surface of the mold. The thickness of the heat-insulating layer can be adjusted by colliding further molten raw materials with this very thin heat-insulating layer and solidifying them. As a method for solidifying raw materials, a conventionally known cooling means may be used, or the raw materials may be simply left to stand to cause solidification. The method for spraying is not particularly limited, and a preferable method can be properly selected from conventionally known methods such as electric arc spraying, plasma spraying and flame spraying.

The thermal conductivity of the heat-insulating layer constituted of porous ceramics can be appropriately adjusted according to the use of the molded article, a type of the PAS-based resin, and the like. In the present invention, the thermal conductivity is preferably 2 W/(m·K) or less, more preferably 0.3 W/(m·K) to 2 W/(m·K). A thermal conductivity of 2 W/(m·K) or less is preferable because an injection-molded article having a high crystallinity tends to be easily obtained even when the injection-molded article is molded at a mold temperature of 100°C or less. A thermal conductivity of 0.3 W/(m·K) or more is preferable because there is almost no possibility of significantly reducing productivity of the injection-molded article due to a decrease in strength of the heat-insulating layer, which results from an excessive increase in the number of bubbles in the heat-insulating layer. Particularly, a thermal conductivity of a heat-insulating layer of 0.7 W/(m·K) or more is preferable because a decrease in strength of the heat-insulating layer, which results from an excessive increase in the number of bubbles in the heat-insulating layer, can be kept at a very low level. As the above-described thermal conductivity, a value obtained by the measurement method described in Example is employed.

In the case where the heat-insulating layer is constituted of a porous zirconia, the thickness of the heat-insulating layer is not particularly limited, but is preferably 200 $\mu$m or more, more preferably 500 $\mu$m to 1000 $\mu$m. A thickness of 500 $\mu$m or more is preferable because the strength of the zirconia heat-insulating layer is enhanced. A thickness of the heat-insulating layer of 1000 $\mu$m or less is preferable because the molding cycle is not extended.

Manufacturing Method for an Injection-Molded Article

The injection-molded article obtained by the manufacturing method of the present invention has a dimensional change rate of 0.2% or less when left for 2 hours in an environment of a mold temperature + 20°C where the mold temperature is that at the time of injection molding and is Tg + 30°C or more and Tg + 80°C or less. When a crystalline thermoplastic resin is a polyarylene sulfide-based resin, the mold temperature + 20°C is approximately 160°C where the mold temperature is that at the time of injection molding. Therefore, when a polyarylene sulfide-based resin is used, the dimensional change rate of an injection-molded article which is exposed for 2 hours to an environment of 160°C may be used as a standard.

An injection-molded article with a low dimensional change rate as described above is easily obtained by using a mold on the inner surface of which a heat-insulating layer is formed.

The heat of the resin composition flowing into a mold is less apt to be released to the inside of the mold due to the existence of a heat-insulating layer. Therefore, the time during which the resin composition is cooled in the mold becomes longer, and even when a resin composition comprising a crystalline thermoplastic resin which is less apt to crystallize or a resin composition comprising a crystalline thermoplastic resin with a low crystallization rate is the raw material, the crystallinity of crystalline thermoplastic resins contained in injection-molded articles can be sufficiently increased.

From the point described above, it is thought that when the time is long, during which the resin composition flowing into the mold is in a state equal to or higher than the temperature required for the crystallization of the crystalline thermoplastic resin in the mold, the crystallinity of the crystalline thermoplastic resin contained in the injection-molded article can be sufficiently increased. Here, "equal to or higher than the temperature required for the crystallization of the crystalline thermoplastic resin" varies depending on types of resin and the like, and is approximately Tg + 30°C or more where Tg is the glass transition temperature of a crystalline thermoplastic resin contained in a resin composition. As Tg, a value measured by the DSC method (a method described in JIS K7121) under conditions of a temperature-increasing rate of 10°C/min is employed.

Since the thermal conductivity of the heat-insulating layer is not 0, the heat of the resin composition flowing into the mold is gradually released to the outside of the mold. At this time, when the temperature of the mold is high, the heat of the resin composition is less apt to be released to the outside of the mold. Therefore, the conditions of mold temperature also have an influence in that the resin composition in the mold remains equal to or higher than a fixed temperature. The conditions of mold temperature have great influence in increasing the crystallinity of a thermoplastic resin contained in an injection-molded article. The conditions of mold temperature required for increasing the crystallinity of injection-molded articles and reducing the dimensional change rate vary depending on types of resin, and are, for example, Tg + 30°C or more and Tg + 80°C or less. Since the crystallinity of crystalline thermoplastic resins contained in injection-molded articles can be sufficiently increased, Tg + 30°C or more is preferred, and Tg + 80°C or less is preferred by reason of that the molding cycle does not become longer. More preferred is Tg + 50°C or more and Tg + 70°C or less.

In particular, when a crystalline thermoplastic resin to be used is a polyarylene sulfide resin, it is preferred that the mold temperature be set to conditions of 140°C or more and 160°C or less. Since the crystallinity of crystalline thermoplastic resins contained in injection-molded articles can be increased, a mold temperature of 140°C or more is preferred. Since transformation at the time of mold release does not occur and the molding cycle does not become longer, a mold temperature of 160°C or less is preferred.

Injection-Molded Article

As described above, the injection-molded article obtained by the manufacturing method of the present invention has a dimensional change rate of 0.2% or less when left for 2 hours in an environment of a mold temperature + 20°C where the mold temperature is that at the time of injection molding and is Tg + 30°C or more and Tg + 80°C or less. Although the usage environment varies depending on the use, the injection-molded article obtained by the manufacturing method of the present invention can be preferably used as components to be used in a high temperature environment since the dimensional change rate of the injection-molded article in the severe environment described above is 0.2% or less. The high temperature environment is, for example for a polyarylene sulfide resin, an environment with a temperature of 80°C or more and 140°C or less.

The injection-molded article obtained by the manufacturing method of the present invention has a high crystallinity. Here, "a high crystallinity" indicates that the crystallinity (the relative crystallinity) is 101 or more when the crystallinity of a molded article formed by molding a crystalline thermoplastic resin using a mold in which a heat-insulating layer is not formed, with the mold temperature being Tg + 55°C, is considered to be 100.

EXAMPLES

The present invention is more specifically explained based on examples, but the present invention is not limited to the examples.

Materials

PAS resin composition: polyphenylene sulfide resin composition (FORTRON 1140A64, by Polyplastics Co., Ltd.), melt viscosity measured in accordance with ISO 11443: 230 Pa·s, glass transition temperature measured by DSC at 10°C/min: 85°C
Raw material of heat-insulating layer: porous zirconia, polyimide

```
Mold: mold for flat plate molding (40 mm (width) × 40 mm

(length) × 2 mm (thickness))
```

Formation of Heat-Insulating Layer

A raw material constituted principally of zirconia was sprayed onto the inner surface of the mold by a spraying method. A heat-insulating layer having a multi-layered structure was formed on the inner surface of the mold with the surface of the heat-insulating layer adjusted to have a high density. Spraying was continued until the thickness of the heat-insulating layer reached a thickness of 500 $\mu$m to produce a mold 1. Furthermore, a polyimide precursor was applied to the inner surface of the mold and solidified by heat to produce a mold 2 with a thickness of the heat-insulating layer of 150 $\mu$m. In this manner, the molds used in the manufacturing method of Examples were obtained.

Method for Calculation of Thermal Conductivity of Heat-Insulating Layer

The thermal conductivity of the heat-insulating layer was calculated from [thermal conductivity] = [thermal diffusivity x specific heat x specific gravity] with the thermal diffusivity measured by a laser flash method, the specific heat measured by DSC, and the specific gravity measured by water replacement method (in accordance with JIS Z8807 "Solid Specific Gravity Measurement Method"). Values of the thermal conductivity are shown in Table 1. The thermal conductivity (A) of the heat-insulating layer having a multi-layered structure was determined as follows: the thermal conductivities of a layer having a low density and a layer having a high density are each determined, and calculation was performed using the equation of $[1/\lambda] - [t/\lambda l] + [(1-t)/\lambda h]$ where the thermal conductivity of the layer having a low density is $\lambda l$, the thermal conductivity of the layer having a high density is $\lambda h$, and the ratio of the thickness of the layer having a low density to the thickness of whole heat-insulating layer is t.

Example 1

An injection-molded article was manufactured using a PAS resin composition as a material for molding and using a mold 1 under molding condition below.

Molding Condition 1

Rotation number of screw: 100 rpm
Injection speed: 100 mm/sec
Mold temperature: 140°C
Resin temperature: 320°C

Example 2

An injection-molded article was produced under the same molding condition as that in Example 1 except that a mold 2 was used.

Comparative Example 1

An injection-molded article was produced under the same condition as in Example 2 except that the mold temperature was changed to 80°C.

Comparative Example 2

An injection-molded article was produced in the same manner as in Example 1 except that the mold having the heat-insulating layer was replaced with a mold having no heat-insulating layer.

Reference Example 1

An injection-molded article was produced in the same manner as in Comparative Example 2 except that the injection-molded article had been heat-treated under conditions of 160°C and 2 hours.

Evaluation of Dimensional Stability

The injection-molded articles in Examples, Comparative Examples, and Reference Example were heated under conditions of 160°C and 2 hours, and the transverse direction and the flow direction of the injection-molded articles after heating were measured. The dimensional change rate of each of the transverse direction and the flow direction was measured. The results of the dimensional change rate are shown in Table 1.

Evaluation of Crystallinity

The crystallinities of the PPS resins involved in Examples, Comparative Examples, and Reference Example were measured by an X-ray diffraction method. Furthermore, with the crystallinity of Comparative Example 2 set to 100, the crystallinities of Examples 1 and 2, Comparative Example 1, and Reference Example 1 were calculated. The results of the calculations are shown in Table 1.

Measurements of the crystallinity by the X-ray diffraction method were performed using wide-angle X-ray diffraction (reflection method). Specifically, the  crystallinity was determined by the Ruland method.

[Table 1]

| | | Example 1 | Example 2 | Comparative Example 1 | Comparative Example 2 | Reference Example 1 |
|---|---|---|---|---|---|---|
| Heat-insulating layer | Material | Zirconia | Polyimide | Polyimide | None | None |
| | Thickness ($\mu$m) | 500 | 150 | 150 | 0 | 0 |
| | Thermal conductivity (W/m· K) | 0.96 | 0.22 | 0.22 | - | - |
| Mold temperature (°C) | | 140 | 140 | 80 | 140 | 140 |
| Dimensional change rate (%) | Length (Flow direction) | 0.01 | 0.01 | 0.1 | 0.1 | 0.01 |
| | Width (Transverse direction) | 0.05 | 0.05 | 0.3 | 0.3 | 0.05 |
| Relative crystallinity | | 112 | 108 | 100 | 100 | 105 |

The results of Examples 1 and 2 and the results of Comparative Example 2 in Table 1 confirmed that, by using a mold having a heat-insulating layer formed thereon, dimensional change in a high temperature environment was reduced even without applying heat treatment to the injection-molded article after molding. Furthermore, the results of Examples 1 and 2 and the results of Reference Example 1 in Table 1 confirmed that the dimensional change was equal to the case where heat treatment was applied to the injection-molded article after molding.

The results of Examples 1 and 2 and the results of Reference Example 1 in Table 1 confirmed that, by using a heat-insulating mold, the crystallinity of a crystalline thermoplastic resin contained in an injection-molded article was drastically improved.

The results of Example 2 and Comparative Example 1 confirmed that even when using a mold having a heat-insulating layer formed thereon, the crystallinity was not improved and  dimensional change in a high temperature environment was high under conditions of a low mold temperature.

**Claims**

1.  A method for manufacturing an injection-molded article having a dimensional change rate of 0.2% or less when left for 2 hours in an environment of a mold temperature + 20°C, the mold temperature being that at which a resin composition constituted of a crystalline thermoplastic resin is injection-molded,
    the method comprising injection-molding the resin composition using a mold on the inner surface of which a heat-insulating layer is formed, with the mold temperature being set to Tg + 30°C or more and Tg + 80°C or less,
    wherein Tg is a glass transition temperature of the crystalline thermoplastic resin.

2.  The method for manufacturing an injection-molded article according to claim 1,
    wherein the mold temperature + 20°C is 160°C, and
    the crystalline thermoplastic resin is a polyarylene sulfide resin.

3.  The method for manufacturing an injection-molded article according to claim 1 or 2, wherein the heat-insulating layer is constituted of porous zirconia.

4.  The method for manufacturing an injection-molded article according to any one of claims 1 to 3, wherein the heat-insulating  layer has a thermal conductivity of 2 W/(m·K) or less.

5.  The method for manufacturing an injection-molded article according to any one of claims 1 to 4, wherein the heat-insulating layer is formed by a spraying method.

6. The method for manufacturing an injection-molded article according to any one of claims 1 to 5, wherein the heat-insulating layer has a thickness of no less than 200 $\mu$m.

<table>
<tr><td colspan="2" align="center"><strong>INTERNATIONAL SEARCH REPORT</strong></td><td colspan="2">International application No.<br>PCT/JP2012/055051</td></tr>
</table>

| A.   CLASSIFICATION OF SUBJECT MATTER |
|---|
| *B29C45/73*(2006.01)i, *B29C33/38*(2006.01)i, *B29C45/78*(2006.01)i, *C08L81/04* (2006.01)i, *B29K81/00*(2006.01)n |

According to International Patent Classification (IPC) or to both national classification and IPC

| B.   FIELDS SEARCHED |
|---|
| Minimum documentation searched (classification system followed by classification symbols)<br>B29C45/00-45/84, B29C33/00-33/76, C08L81/04, B29K81/00 |

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

| C.   DOCUMENTS CONSIDERED TO BE RELEVANT |
|---|

| Category* | Citation of document, with indication, where appropriate, of the relevant passages | Relevant to claim No. |
|---|---|---|
| Y | JP 2001-348478 A  (Toray Industries, Inc.), 18 December 2001 (18.12.2001), claims 1, 6; paragraphs [0005], [0052] to [0060]; table 1; paragraph [0062] (Family: none) | 1-6 |
| Y | JP 2008-266600 A  (Toray Industries, Inc.), 06 November 2008 (06.11.2008), paragraph [0178] (Family: none) | 1-6 |
| Y | JP 2006-062369 A  (Mitsubishi Engineering-Plastics Corp.), 09 March 2006 (09.03.2006), paragraphs [0018], [0026], [0031], [0040] to [0042]; fig. 1 & JP 11-42650 A          & US 6165407 A | 1-6 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    08 May, 2012 (08.05.12) | Date of mailing of the international search report<br>    22 May, 2012 (22.05.12) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/055051 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-191378 A  (Ono Sangyo Co., Ltd.),<br>17 July 2001 (17.07.2001),<br>paragraphs [0007], [0031]<br>(Family: none) | 1-6 |
| Y<br>A | JP 2009-274352 A  (Mitsubishi Engineering-<br>Plastics Corp.),<br>26 November 2009 (26.11.2009),<br>claims 6, 7; paragraphs [0032], [0038],<br>[0039]; fig. 1, 2<br>(Family: none) | 3-6<br>1,2 |

Form PCT/ISA/210 (continuation of second sheet) (July 2009)

**REFERENCES CITED IN THE DESCRIPTION**

**Patent documents cited in the description**

- JP 2010110892 A